# EUROPEAN PATENT SPECIFICATION

(11) **EP 2 682 863 B1**
(45) Date of publication and mention of the grant of the patent: **02.09.2020**
(21) Application number: 13170027.0
(22) Date of filing: 31.05.2013
(51) Int. Cl.: G06F 8/61

(54) **Installing applications remotely**
Entfernte Installation von Anwendungen
Installation d'applications à distance

(30) Priority: 30.05.2012 US 201213483342
(43) Date of publication of application: 08.01.2014
(73) Proprietor: Google LLC, Mountain View, CA 94043 (US)
(72) Inventor: Brunsman, Jonathan, Mountain View, CA 94043 (US); Sonntag, Christian, Mountain View, CA 94043 (US); Klein, Jeremy Logan, Mountain View, CA 94043 (US)
(74) Representative: Hewett, Jonathan Michael Richard

(56) References cited:
- WO-A1-98/53397

## Description

### BACKGROUND

Handheld computing devices such as the mobile telephone have proliferated in recent years. These devices can be equipped with processors, memory, and the capability to communicate through local and wide area networks, including the Internet. These devices can be equipped with operating systems which permit the devices to execute a wide range of computer programs, typically called "apps." The user of a handheld device can download computer programs and other content by direct communication with a server through a mobile telephone network or wireless local area network. Alternatively, a user can attempt to download content to a personal computer such as a desktop or a laptop computer. Often, it is more convenient for a user to browse, select and purchase an application through a system such as the personal computer. Once the application is downloaded to the personal computer, it may be further transmitted to the handheld device through a process such as synchronization, which can involve tethering the device to the personal computer.

International patent application WO 98/ 53397 relates to a system and method for deploying one or more software packages over a communications interface.

### SUMMARY

The disclosure relates to installing applications remotely.

One aspect of the disclosed embodiments is a method that includes accessing, at one or more server computers, configuration information for a mobile device. The configuration information represents one or more installed software applications. The method also includes transmitting information from the one or more server computers to a remote computer. The information, when rendered at the remote computer, is operable to cause display of an interface for installing applications at the mobile device. The interface is based at least in part on the configuration information. The method also includes receiving, at the one or more server computers from the remote computer, an identification of a software application to be installed at the mobile device. The identification of the software application is made at the remote computer using the interface for installing applications. The method also includes sending a push notification from the one or more server computers to the mobile device. The push notification includes information identifying the software application. The push notification, when processed by the mobile device, causes the mobile device to retrieve and install the software application.

Another aspect of the disclosed embodiments is a non-transitory computer readable medium including program instructions executable by one or more processors. The instructions, when executed, cause the one or more processors to perform operations that include accessing, at one or more server computers, configuration information for a mobile device. The configuration information represents one or more installed software applications. The operations also include transmitting information from the one or more server computers to a remote computer. The information, when rendered at the remote computer, is operable to cause display of an interface for installing applications at the mobile device. The interface is based at least in part on the configuration information. The operations also include receiving, at the one or more server computers from the remote computer, an identification of a software application to be installed at the mobile device. The identification of the software application is made at the remote computer using the interface for installing applications. The operations also include sending a push notification from the one or more server computers to the mobile device. The push notification includes information identifying the software application. The push notification, when processed by the mobile device, causes the mobile device to retrieve and install the software application.

Another aspect of the disclosed embodiments is a method that includes receiving, at one or more server computers from a remote computer, an identification of a software application to be installed at a mobile device, and sending a push notification from the one or more server computers to the mobile device. The push notification includes information identifying the software application, wherein the push notification, when processed by the mobile device, causes the mobile device to retrieve and install the software application.

### BRIEF DESCRIPTION OF THE DRAWINGS

The description herein makes reference to the accompanying drawings wherein like reference numerals refer to like parts throughout the several views, and wherein:
FIG. 1 is a block diagram of a system for installing applications remotely.
FIG. 2 is a block diagram showing an example of a hardware configuration for a web server.
FIG. 3 is a flowchart showing a first example of a process for installing applications remotely.
FIG. 4 is a flowchart showing a second example of a process for installing applications remotely.

### DETAILED DESCRIPTION

In the remote device management system and methods described here, a user can cause applications to be installed on a mobile device remotely using an interface that is displayed at a computer other than the mobile device. In response to user selection of an application to be installed using the interface, installation of the application is caused by transmission of a push notification from one or more servers to the mobile device, where the push notification identifies the software application to be installed. When the mobile device receives and processes the push notification, the push notification causes the mobile device to retrieve and install the software application. This can allow the user to install applications at the mobile device without interacting with the mobile device, and the mobile device need not be accessible to the user in order to perform installation of applications. The systems and methods described herein can also allow the user to install applications for multiple mobile devices simultaneously using a single computer.

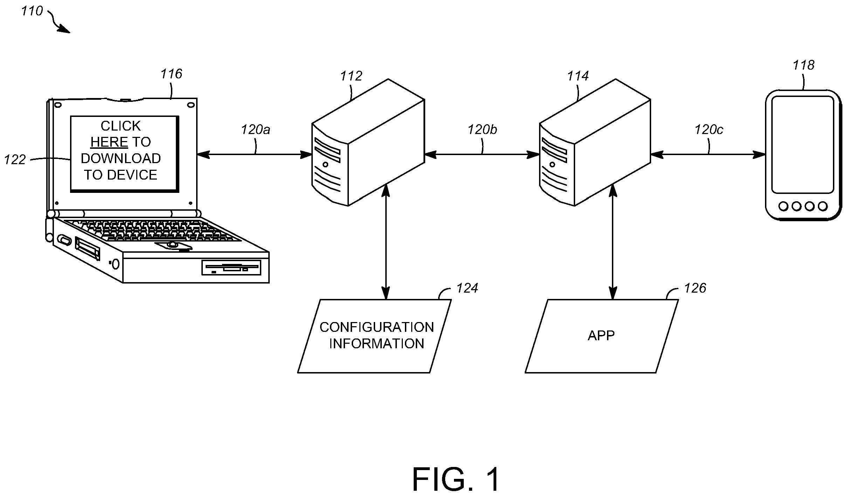

FIG. 1 is a block diagram of a system 110 in accordance with one implementation. The system 110 can include one or more server computers such as a web server 112 and a content server 114, which are in communication with a remote computer 116 and a mobile device 118. The remote computer 116, the web server 112, the content server 114 and the mobile device 118 can be in communication with one another by network connections 120a-120c.

The web server 112 is operable to transmit information, such as a web page (*i*.*e*., HTML code and/or other information defining a web page), to the remote computer 116, that, when rendered, causes the remote computer 116 to display a configuration interface 122. The configuration interface 122 can be based at least in part on configuration information 124 regarding the mobile device 118.

The web server 112 can store, access, and/or retrieve the configuration information 124. The configuration information 124 includes data regarding the mobile device 118, and can include data regarding other mobile devices as well. In some implementations, the configuration information 124 can include data regarding multiple mobile devices that are associated with a single user.

The configuration information 124 can include information identifying the mobile device 118 and configuration information pertaining to the mobile device 118. For example, the information identifying the handheld device can include an IP address or telephone number assigned to the device. In some examples, the configuration information 124 can include the hardware description, operating system, or carrier information of mobile device 118. In other examples, the configuration information 124 can include at least one of information concerning the presence, absence and/or configuration of the following features: a touchscreen, hardware acceleration, telephony, WIFI capability, 3G compatibility, storage, memory, battery or processor on the mobile device 118. Personally identifiable information of the user of the mobile device 118 need not be provided in the configuration information 124.

The configuration information 124 can also include information representing the software applications that are installed at the device, including information identifying the software applications, such as a name or other text-based identifier and version information for the software applications. The configuration information 124 can be gathered using a check-in routine, where the mobile device 118 transmits the configuration information 124 to the web server 112. In addition or as an alternative, the web server 112 can maintain the configuration information 124 by storing information regarding configuration transactions that are executed using the configuration interface 122.

In one implementation, the configuration information 124 can be used to generate the information defining the configuration interface 122 in the form of an interface for installing and/or uninstalling applications at the mobile device 118. As one example, the configuration interface 122 can show a listing of applications that are currently installed on the mobile device 118 based on the configuration information. The configuration interface 122 can also show a listing of applications that can be installed on the mobile device 118. This listing can, in some implementations, be based in part on the configuration information 124, for example, by excluding applications on the basis of system requirements that are not met by the mobile device 118. In some implementations, the configuration interface can allow for installation or uninstallation of software applications at one or more mobile devices that are selected from a list of mobile devices. The list of mobile devices can include devices that are associated with a user account.

The information defining the configuration interface 122 can be transmitted from the web server 112 to the remote computer 116 in response to a request for the configuration interface 122 from the remote computer 116. The request from the remote computer 116 can include an identification of the mobile device 118. In one example, the information identifying the mobile device 118 can be a user name that is associated with the mobile device 118 and, optionally, with other mobile devices as well. The web server 112 can perform an authorization routine using the user name as well as a password or other criteria showing that the user of the remote computer 116 is authorized to perform configuration tasks for the mobile device 118. In other implementations, the information identifying the mobile device 118 can be in any suitable form, such as a unique hardware identifier or an IP address.

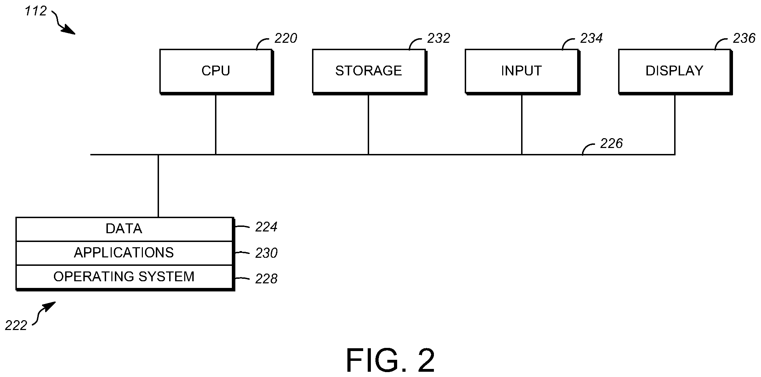

FIG. 2 is a block diagram of an example of a hardware configuration for the web server 112. The content server 114, the remote computer 116, and the mobile device 118 can be implemented using a similar hardware configuration.

The CPU 220 of the web server 112 can be a conventional central processing unit. Alternatively, the CPU 220 can be any other type of device, or multiple devices, capable of manipulating or processing information now-existing or hereafter developed. Although the disclosed examples can be practiced with a single processor as shown, e.g. CPU 220, advantages in speed and efficiency can be achieved using more than one processor.

The web server 112 can include memory 222, such as a random access memory device (RAM). Any other suitable type of storage device can be used as the memory 222. The memory 222 can include code and data 224 that can be accessed by the CPU 220 using a bus 226. The memory 222 can further include an operating system 228 and one or more application programs 230. The application programs 230 can include programs that permit the CPU 220 to perform the methods described here.

A storage device 232 can be optionally provided in the form of any suitable computer readable medium, such as a hard disc drive, a memory device, a flash drive or an optical drive. One or more input devices 234, such as a keyboard, a mouse, or a gesture sensitive input device, receive user inputs and can output signals or data indicative of the user inputs to the CPU 220. One or more output devices can be provided, such as a display device 236. The display device 236, such as liquid crystal display (LCD) or a cathode-ray tube (CRT), allows output to be presented to a user, for example, in response to receiving a video signal.

Although FIG. 1 depicts the CPU 220 and the memory 222 of the server 114 as being integrated into a single unit, other configurations can be utilized. The operations of the CPU 220 can be distributed across multiple machines (each machine having one or more of processors) which can be coupled directly or across a local area or other network. The memory 222 can be distributed across multiple machines such as network-based memory or memory in multiple machines performing the operations of the web server 112. Although depicted here as a single bus, the bus 226 of the web server 112 can be composed of multiple buses. Further, the storage device 232 can be directly coupled to the other components of the web server 112 or can be accessed via a network and can comprise a single integrated unit such as a memory card or multiple units such as multiple memory cards. The web server 112 can thus be implemented in a wide variety of configurations.

Returning to FIG. 1, the content server 114 can facilitate installation of applications, such as a software application 126, at the mobile device 118. In one implementation, a request for installation of the software application is generated at the remote computer 116 in response to user interaction with the configuration interface 122 and is transmitted to the web server 112 via the network connection 120a before being relayed to the content server 114 via the network connection 120b. Upon receiving the identification of the software application 126 from the remote computer 116 at the content server 114, the content server 114 sends a push notification to the mobile device 118. As used herein, push notification means a message, signal, or data that is transmitted in the context of a communications transaction that originates from a server computer, such as the web server 112 or the content server 114. The push notification that is sent to the mobile device 118 from the content server 114 includes information that identifies the software application 126. The push notification includes information sufficient to cause the mobile device 118 to retrieve and install the software application 126 when the push notification is received and processed by the mobile device 118. The information identifying the software application 126 can be in any suitable form, such as a name of the software application 126, a serial number of the software application 126, and/or a uniform resource locator (URL) from which the software application 126 can be downloaded by the mobile device 118.

In implementations where the information identifying the software application is or includes a URL, the URL can be a custom URL that is generated by the content server 114 in response to identification of the software application 126 by the user of the remote computer 116. The custom URL can be associated with the mobile device 118. For example, the custom URL can be associated with the mobile device 118 by updating the configuration information 124 to include a reference to the custom URL. In such an implementation, the content server 114 can be configured to detect a request for the custom URL, and, upon completion of the download of the software application 126 to the mobile device 118, can cause the configuration information 124 for the mobile device 118 to be updated to reflect the fact that the software application 126 was downloaded to the mobile device 118. In addition, in implementations where a custom URL is generated by the content server 114, the content server 114 can be configured to remove the custom URL after a predetermined time period has passed, such that the custom URL only remains valid for the predetermined time period.

Other types of content items could also be stored and transmitted by the content server 114, such as media files and documents.

The remote computer 116 can be any computing device that is separate from the mobile device 118. As examples, the remote computer can be a personal desktop computer, a laptop, notepad, personal digital assistant, tablet computer, cloud computer, smart phone, plug computer, home video game console or any other device. The remote computer 116 can receive information from the web server 112 via the network connection 120a, such as the information defining the configuration interface 122. The remote computer 116 can render and display the configuration interface 122, and transmit to the web server 112 signals or data indicative of user input. For example, user input at the remote computer 116 can indicate a software application to be installed at the mobile device 118, and corresponding signals or data can be transmitted from the remote computer 116 to the web server 112 via the network connection 120a.

The mobile device 118 can be a smart phone, tablet computer, or other mobile computing device that can connect to the content server 114 via the network connection 120c using a wireless communication protocol such as Bluetooth, Wi-Fi, infrared networks, 802.11b, g, or n networks, 3G or 4G, or the like. In this example, the network connection 120c can include a wired access point in communication with mobile device 118 via a wireless local area network such as one based the IEEE 802.11 standards or any other suitable wireless standards such as 3G, 4G, LTE or other standards.

The mobile device 118 can be configured to retrieve and install the software application 126 in response to the push notification from the content server 114. Retrieval and installation of the software application 126 can occur automatically in response to the push notification, can occur in response to user input, can occur at a predetermined time, or can occur in response to any other triggering event. The mobile device 118 can retrieve the software application 126 from the content server 114 using a client pull network communication via the network connection 120c. As used herein, a client pull is a network communication that is initiated by a client, such as the mobile device 118, and is responded to by a server, such as the content server 114. For example, in response to the push notification from the content server 114, the mobile device 118 can issue an HTTP GET request for download of the software application 126, for example, by specifying the URL that is included in the push notification. In response to such a request, the content server 114 transmits the software application 126 to the mobile device 118.

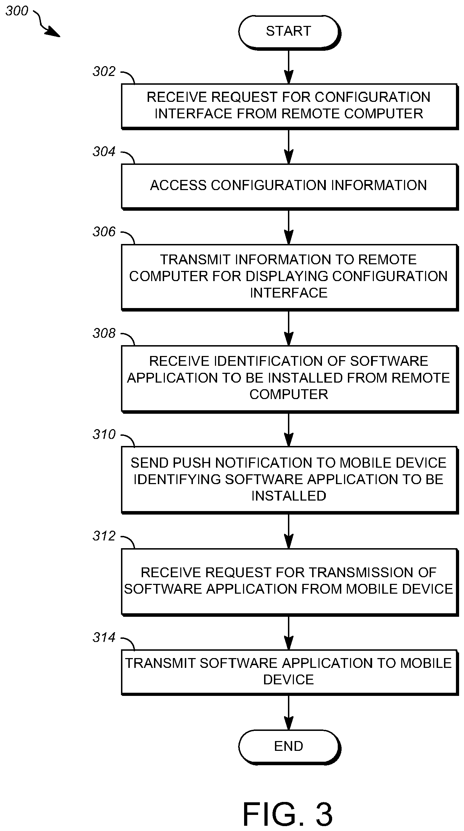

A first example of a process 300 for installing applications remotely will be described with reference to FIG. 3. The operations described in connection with the process 300 can be performed at one or more server computers, such as the web server 112 and the content server 114. Where an operation is described as being performed by one or more computers, it is completed when it is performed by one computer. The process 300 can be embodied in the form of computer executable program instructions that are stored on a non-transitory computer readable medium such as the memory 222 of the web server 112 that, when executed by a processor, such as the CPU 220 of the web server 112, causes the processor to perform the operations that will be described herein with reference to the process 300.

Operation 302 includes receiving a request for a device configuration interface from a remote computer. Receiving a request can occur in any suitable manner, such as receiving by transmission over a local area network, a wide area network, a wired network, or a wireless network, and can be a result of direct communication or indirect communication via one or more intervening computers or systems. Operation 302 can be performed by one or more server computers, such as the web server 112 or the content server 114. As an example, the web server 112 can receive a request for the configuration interface 122 from the remote computer 116.

Operation 304 includes accessing, at one or more server computers, configuration information for a mobile device. Accessing can occur in any suitable manner, such as accessing from memory, accessing from a disk, or accessing from remote storage or memory. Accessing configuration information from any such source can occur after it is received from the mobile device. The configuration information can represent one or more software applications that are installed on the mobile device. Operation 304 can be performed by one or more server computers, such as the web server 112 and the content server 114. In one example, the web server 112 accesses the configuration information 124.

Operation 306 includes transmitting, from one or more computers to a remote computer, information that causes the remote computer to display a configuration interface for installing and/or uninstalling applications at a mobile device. Transmitting can occur in any suitable manner, such as by transmission over a local area network, a wide area network, a wired network, or a wireless network, and can be a result of direct communication or indirect communication via one or more intervening computers or systems. In one example, operation 306 includes transmitting information from the web server 112 to the remote computer 116 that, when rendered at the remote computer 116, is operable to cause display of the configuration interface 122, which can be based, at least in part, on the configuration information 124.

Operation 308 includes receiving an identification of a software application to be installed at a mobile device. Receiving an identification can occur in any suitable manner, such as receiving by transmission over a local area network, a wide area network, a wired network, or a wireless network, and can be a result of direct communication or indirect communication via one or more intervening computers or systems. This operation can be performed at one or more server computers, such as the web server 112 and the content server 114. In one example, an identification of the software application 126 is made at the remote computer 116 using the configuration interface 122 and is received at the web server 112.

Operation 310 includes sending a push notification that identifies the software application that is to be installed at the mobile device. Sending can occur in any suitable manner, such as by transmission over a local area network, a wide area network, a wired network, or a wireless network, and can be a result of direct communication or indirect communication via one or more intervening computers or systems. In some implementations, operation 310 includes sending the push notification in part via a wireless connection to the mobile device. The push notification, when processed by the mobile device, causes the mobile device to retrieve and install the software application. The push notification can be sent from one or more server computers, such as the web server 112 and the content server 114. In one example, the push notification is sent from the content server 114 to the mobile device 118 and includes any identification of the software application 126. In this example, the push notification, when processed by the mobile device 118, causes the mobile device 118 to retrieve and install the software application 126.

Operation 312 includes receiving a request for transmission of the software application in response to the push notification. Receiving a request can occur in any suitable manner, such as receiving by transmission over a local area network, a wide area network, a wired network, or a wireless network, and can be a result of direct communication or indirect communication via one or more intervening computers or systems. This operation can be performed at one or more server computers, such as the web server 112 and the content server 114. In one example, the request for transmission of the software application 126 is sent from the mobile device 118 to the content server 114 in response to the push notification.

Operation 314 includes transmitting the software application in response to the request for transmission of the software application. Transmitting can occur in any suitable manner, such as by transmission over a local area network, a wide area network, a wired network, or a wireless network, and can be a result of direct communication or indirect communication via one or more intervening computers or systems. This operation can be performed at one or more server computers, such as the web server 112 and the content server 114. In one example, the content server 114 transmits the software application to the mobile device 118 in response to the request for transmission of the software application 126 from the mobile device 118.

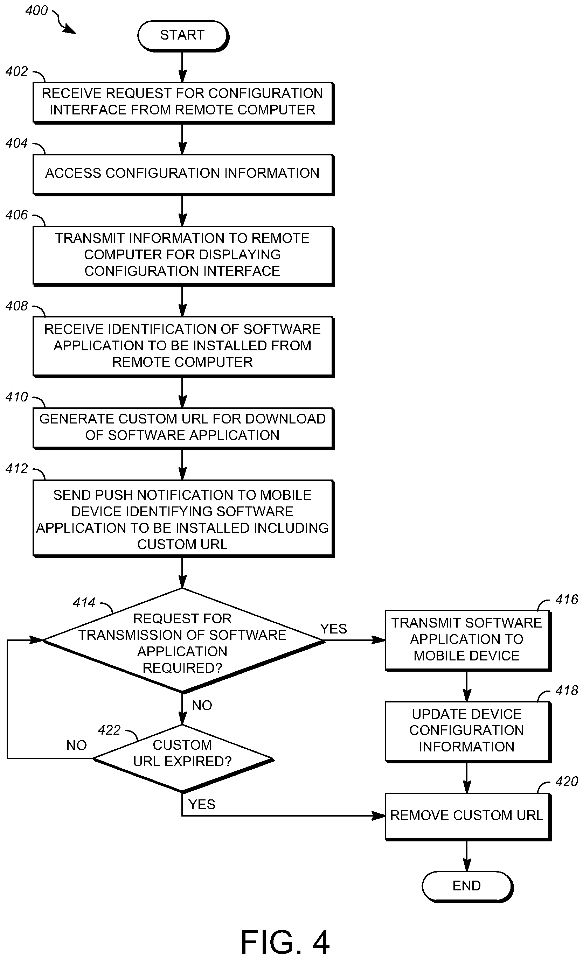

FIG. 4 shows a second example of a process for installing applications remotely. The operations described in connection with the process 400 can be performed at one or more server computers, such as the web server 112 and the content server 114. Where an operation is described as being performed by one or more computers, it is completed when it is performed by one computer. The operations described in connection with the process 400 can be embodied as a non-transitory computer readable medium including program instructions executable by one or more processors that, when executed, cause the one or more processors to perform the operations. For example, the operations described in connection with the process 400 could be stored at the memory 222 of the web server 112 and be executable by the CPU 220 of the web server 112.

Operations 402, 404, 406, and 408 are identical to operations 302, 304, 306, and 308, respectively, of the process 300.

Operation 410 includes generating a custom URL for download of the software application. Generating a custom URL can be performed in any suitable manner, such as by random generation of an identifier that is incorporated in the custom URL, or by using a template. The custom URL for downloading the software application can be generated in response to receiving the identification of the software application at operation 408 and the custom URL can be associated with the mobile device. In one example, the custom URL is generated by the content server 114.

Operation 412 includes sending a push notification identifying the software application to be installed, where the identification of the software application to be installed includes the custom URL that was generated at operation 410. Sending can occur in any suitable manner, such as by transmission over a local area network, a wide area network, a wired network, or a wireless network, and can be a result of direct communication or indirect communication via one or more intervening computers or systems. In some implementations, operation 412 includes sending the push notification in part via a wireless connection to the mobile device. In one example, the push notification including the custom URL is sent from the content server 114 to the mobile device 118 and includes the custom URL for download of the software application 126.

Operation 414 includes determining whether a request for transmission of the software application has been received. In one example, it is determined that a request for transmission of software is received when a request, such as an HTTP GET request is received at the content server 114 from the mobile device 118, where the HTTP GET request specifies the custom URL. If, at operation 414, it is determined that a request for transmission of the software application is received, the process proceeds to operation 416. If it is determined that a request for transmission of the software application is not received, the process proceeds to operation 422.

Operation 416 includes transmitting the software application to the mobile device. Transmitting can occur in any suitable manner, such as by transmission over a local area network, a wide area network, a wired network, or a wireless network, and can be a result of direct communication or indirect communication via one or more intervening computers or systems. In one implementation, operation 416 includes transmitting the software application 126 from the content server 114 to the mobile device 118 in the context of a client pull network communication that is initiated by the mobile device 118 at operation 414.

Operation 418 includes updating device configuration information in response to transmission of the software application to the mobile device at operation 416. In one example, this includes transmission of a signal from the content server 114 to the web server 112 that causes the web server 112 to update the configuration information 124 to reflect the fact that the software application 126 was transmitted to the mobile device 118.

Operation 420 includes removing the custom URL. This can be performed, for example, by the content server 114. After completion of operation 420, the process ends.

Operation 422, which is performed after it is determined that a request for transmission of the software application has not been received at operation 414, includes determining whether the custom URL has expired. In one example, the content server 114 determines whether the customer URL should no longer be valid based on the passage of a predetermined time period. If it is determined that the custom URL has expired, the process proceeds to operation 420, where the custom URL is removed, as previously explained. If it is determined that the custom URL has not expired, the process returns to operation 414.

The web server 112 and the content server 114 (and the algorithms, methods, instructions etc. stored thereon and/or executed thereby) can be realized in hardware including, for example, intellectual property (IP) cores, application-specific integrated circuits (ASICs), programmable logic arrays, optical processors, programmable logic controllers, microcode, firmware, microcontrollers, servers, microprocessors, digital signal processors or any other suitable circuit. In the claims, the term "processor" should be understood as encompassing any the foregoing, either singly or in combination. The terms "signal" and "data" are used interchangeably. Further, portions of the web server 112 and the content server 114 do not necessarily have to be implemented in the same manner.

In some implementations, the operations of the web server 112 and the content server 114 can be combined into a single server. In other implementations, the functions of the web server 112 or the content server 16 can be distributed across a number of different devices. Although illustrated for simplicity as unitary machines, it is understood that the web server 112 and content server 114 of the system 110 are not necessarily implemented using a single processor, or a single physical machine. Moreover, although features may be described above or claimed as acting in certain combinations, one or more features of a combination can in some cases be excised from the combination, and the combination may be directed to a sub-combination or variation of a sub-combination.

In another example, the web server 112 and the content server 114 can be implemented using general purpose computers/processors with a computer program that, when executed, carries out any of the respective methods, algorithms and/or instructions described herein. In addition or alternatively, for example, special purpose computers/processors can be utilized which can contain specialized hardware for carrying out any of the methods, algorithms, or instructions described herein.

Further, all or a portion of the embodiments of the disclosure can take the form of a computer program product accessible from, for example, a non-transitory computer-usable or computer-readable medium. A non-transitory computer-usable or computer-readable medium can be any device that can, for example, tangibly contain, store, communicate, or transport the program for use by or in connection with any processor. The non-transitory medium can be, for example, an electronic device, magnetic device, optical device, electromagnetic device, or a semiconductor device. Other suitable mediums are also available.

While this disclosure includes what is presently considered to be the most practical and preferred embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications as is permitted under the law.

## Claims

1. A method, comprising:
receiving, at one or more server computers (112, 114) from a remote computer (116) :
an identification of a mobile device (118); and
an identification of a user that is an owner of the mobile device;
accessing, at the one or more server computers, configuration information (124) regarding the presence or absence and/or configuration of one or more hardware features of the mobile device;
the one or more server computers providing information for displaying a configuration interface (122) to the remote computer based at least in part on the configuration information of the mobile device;
determining a list of applications that can be installed on the mobile device based upon the configuration information of the mobile device; and
receiving, at the remote computer via the configuration interface, an identification of a software application (126) to be installed from the list of applications at the mobile device and providing the identification to the one or more server computers;
sending a push notification from the one or more server computers to the mobile device, the push notification including information identifying the software application to be installed at the mobile device,
wherein the push notification, when processed by the mobile device, causes the mobile device to retrieve and install the software application.

2. The method of claim 1, further comprising:
receiving, at the one or more server computers (112, 114) from the mobile device (118), a request for transmission of the software application (126), in response to the push notification.

3. The method of claim 1 or 2, further comprising:
transmitting, from the one or more server computers (112, 114) to the mobile device (108), the software application (126), in response to the request for transmission of the software application.

4. The method of one of claims 1 to 3, wherein the information identifying the software application (126) includes a uniform resource locator URL for downloading the software application.

5. The method of claim 4, wherein the URL for downloading the software application (126) is generated in response to receiving the identification of the software application and is associated with the mobile device (118).

6. The method of claim 4 or 5, wherein the URL remains valid for a predetermined time period.

7. The method of one of claims 4 to 6, wherein the configuration information (124) of the mobile device (118) further represents one or more installed software applications, further comprising:
detecting a request for the URL for downloading the software application (126); and updating the configuration information (124) for the mobile device (118) in response to detecting the request for the URL for downloading the software application.

## Patentansprüche

1. Verfahren, umfassend:
Empfangen, an einem oder mehreren Servercomputern (112, 114), ausgehend von einem Remotecomputer (116):
einer Identifikation eines Mobilgeräts (118); und einer Identifikation eines Benutzers, der ein Besitzer des Mobilgeräts ist;
Zugreifen, an dem einen oder den mehreren Servercomputern, auf Konfigurationsinformationen (124) bezüglich des Vorhandenseins oder Nichtvorhandenseins und/oder der Konfiguration eines oder mehrerer Hardware-Merkmale des Mobilgeräts;
Bereitstellen, durch den einen oder die mehreren Servercomputer, von Informationen zum Anzeigen einer Konfigurationsschnittstelle (122) für den Remotecomputer zumindest teilweise basierend auf den Konfigurationsinformationen des Mobilgeräts;
Ermitteln einer Liste von Anwendungen, die auf dem Mobilgerät installiert werden können, basierend auf den Konfigurationsinformationen des Mobilgeräts; und
Empfangen, an dem Remotecomputer über die Konfigurationsschnittstelle, einer Identifikation einer aus der Liste von Anwendungen auf dem Mobilgerät zu installierenden Softwareanwendung (126) und Bereitstellen der Identifikation für den einen oder die mehreren Servercomputer;
Senden einer Push-Benachrichtigung von dem einen oder den mehreren Servercomputern an das Mobilgerät, wobei die Push-Benachrichtigung Informationen beinhaltet, die die auf dem Mobilgerät zu installierende Softwareanwendung identifizieren,
wobei die Push-Benachrichtigung, bei Verarbeitung durch das Mobilgerät, das Mobilgerät veranlasst, die Softwareanwendung abzurufen und zu installieren.

2. Verfahren nach Anspruch 1, ferner umfassend:
Empfangen, an dem einen oder den mehreren Servercomputern (112, 114), ausgehend von dem Mobilgerät (118), einer Anforderung zur Übermittlung der Softwareanwendung (126) in Reaktion auf die Push-Benachrichtigung.

3. Verfahren nach Anspruch 1 oder 2, ferner umfassend:
Übermitteln, von dem einen oder den mehreren Servercomputern (112, 114) an das Mobilgerät (108), der Softwareanwendung (126) in Reaktion auf die Anforderung zur Übermittlung der Softwareanwendung.

4. Verfahren nach einem der Ansprüche 1 bis 3, wobei die Informationen, die die Softwareanwendung (126) identifizieren, eine URL (Uniform Resource Locator) zum Herunterladen der Softwareanwendung beinhalten.

5. Verfahren nach Anspruch 4, wobei die URL zum Herunterladen der Softwareanwendung (126) in Reaktion auf ein Empfangen der Identifikation der Softwareanwendung erzeugt wird und mit dem Mobilgerät (118) assoziiert ist.

6. Verfahren nach Anspruch 4 oder 5, wobei die URL für einen vorbestimmten Zeitraum gültig bleibt.

7. Verfahren nach einem der Ansprüche 4 bis 6, wobei die Konfigurationsinformationen (124) des Mobilgeräts (118) ferner eine oder mehrere installierte Softwareanwendungen darstellen, ferner umfassend:
Erkennen einer Anforderung für die URL zum Herunterladen der Softwareanwendung (126); und Aktualisieren der Konfigurationsinformationen (124) für das Mobilgerät (118) in Reaktion auf das Erkennen der Anforderung für die URL zum Herunterladen der Softwareanwendung.

## Revendications

1. Procédé, comprenant :
la réception, sur un ou plusieurs ordinateurs serveur (112, 114) depuis un ordinateur distant (116) :
d'une identification d'un dispositif mobile (118) ; et
d'une identification d'un utilisateur qui est propriétaire du dispositif mobile ;
l'accès, sur un ou plusieurs ordinateurs serveur, à des informations de configuration (124) concernant la présence ou l'absence et/ou la configuration d'une ou plusieurs fonctions matérielles du dispositif mobile ;
les un ou plusieurs ordinateurs serveur fournissant des informations d'affichage d'une interface de configuration (122) à l'ordinateur distant sur la base au moins en partie des informations de configuration du dispositif mobile ;
la détermination d'un poing d'applications pouvant être installé sur l'appareil mobile sur la base des informations de configuration du dispositif mobile ; et
la réception, sur l'ordinateur distant via l'interface de configuration, d'une identification d'une application logicielle (126) à installer depuis la liste d'applications sur le dispositif mobile et la fourniture de l'identification aux un ou plusieurs ordinateurs serveur ;
l'envoi d'une notification directe depuis les un ou plusieurs ordinateurs serveur vers le dispositif mobile, la notification directe incluant des informations identifiant l'application logicielle à installer sur le dispositif mobile, dans lequel la notification directe, lorsqu'elle est traitée par le dispositif mobile, amène le dispositif mobile à récupérer l'application logicielle et à l'installer.

2. Procédé selon la revendication 1, comprenant en outre :
la réception, sur les un ou plusieurs ordinateurs serveur (112, 114) depuis le dispositif mobile (118), d'une demande de transmission de l'application logicielle (126), en réponse à la notification directe.

3. Procédé selon la revendication 1 ou 2, comprenant en outre :
la transmission, depuis les un ou plusieurs ordinateurs serveur (112, 114) vers le dispositif mobile (108), de l'application logicielle (126), en réponse à la demande de transmission de l'application logicielle.

4. Procédé selon l'une des revendications 1 à 3, dans lequel les informations identifiant l'application logicielle (126) incluent une URL de localisateur de ressources uniforme pour le téléchargement de l'application logicielle.

5. Procédé selon la revendication 4, dans lequel l'URL pour le téléchargement de l'application logicielle (126) est générée en réponse à la réception de l'identification de l'application logicielle et est associée au dispositif mobile (118).

6. Procédé selon la revendication 4 ou 5, dans lequel l'URL reste valide pendant une période prédéterminée.

7. Procédé selon l'une des revendications 4 à 6, dans lequel les informations de configuration (124) du dispositif mobile (118) représentent en outre une ou plusieurs applications logicielles installées, comprenant en outre :
la détection d'une demande de l'URL pour le téléchargement de l'application logicielle (126) ; et la mise à jour des informations de configuration (124) pour le dispositif mobile (118) en réponse à la détection de la demande de l'URL pour le téléchargement de l'application logicielle.
